# EUROPÄISCHE PATENTANMELDUNG

(11) **EP 0 594 537 A1**
(43) Veröffentlichungstag der Anmeldung: **27.04.1994**
(21) Anmeldenummer: 93810711.7
(22) Anmeldetag: 11.10.1993
(51) Int. Cl.: F03B 13/18, F03B 13/20

(54) **Vorrichtung zur Erzeugung von hydrodynamischer Kraft**

(30) Priorität: 19.10.1992 CH 3237/92
(71) Anmelder: Previsic, Branislav, CH-8497 Fischenthal (CH); Previsic, Mile, HR-41090 Zagreb (HR)
(72) Erfinder: Previsic, Branislav, CH-8497 Fischenthal (CH); Previsic, Mile, HR-41090 Zagreb (HR)
(74) Vertreter: Salgo, Reinhold Caspar, Dr.

(57) **Zusammenfassung**

Die Vorrichtung nutzt die Energie von Wellen (32) eines offenen Gewässers (30). Sie umfasst mindestens einen verankerten Schwimmer (34), wenigstens ein verlängerbares Pumporgan (10) und ein Druckmedium (24). Das am Schwimmer (34) angehängte Pumporgan (10) hat wenigstens einen unter Verkürzung in Längsrichtung radial aufweitbaren, gas- und/oder flüssigkeitsundurchlässigen Schlauch (12) mit je einer Eingangs- und/oder Ausgangsöffnung für wenigstens ein hydraulisches und/oder pneumatisches Druckmedium (24). Jedem Schlauch (12) liegen flexible längslaufende Fasern (14) von hoher Zugfestigkeit an, welche gestreckt bevorzugt parallel verlaufen. Die Fasern (14) haben einen mit dem Schwimmer (34) verbundenen oberen Kraftansatz (16) und einen mit einer Verankerung (38) verbundenen unteren Kraftansatz (18). Die Zugkraft (Z) greift in Längsrichtung des Pumporgans (10) nie an einem Schlauch (12) an.

Zweckmässig sind in regelmässigen Abständen die Fasern (14) führende Ringe (20) angeordnet.

Die Vorrichtung dient beispielsweise als Energiequelle für ein elektrisches Kraftwerk, die Wasserversorgung, die Wasserspeicherung, die Durchmischung und Belüftung von stehenden Gewässern und die Entsalzung von Meerwasser.

## Beschreibung

Die Erfindung bezieht sich auf eine Vorrichtung zur Erzeugung von hydrodynamischer Kraft durch Umwandlung von Energie von Wellen eines offenen Gewässers, mit mindestens einem verankerten Schwimmer, wenigstens einem verlängerbaren Pumporgan und einem Druckmedium.

Wellen von offenen Gewässern, insbesondere Meereswellen, haben einen hohen Energieinhalt, sind praktisch unerschöpflich, können kostenlos benutzt und ohne jegliche ökologisch bedenkliche Rückstände verwertet werden. Eine Nutzung der Wellenenergie in industriellem Rahmen ist bisher nicht bekannt, wohl auch wegen Korrosionsproblemen.

Der Energieinhalt von Wellen wird durch Kreisschwingungen des Wassers fortgeleitet. Diese vermögen einen Schwimmer zu heben, was einen entsprechenden Energieverlust der Welle zur Folge hat. Offensichtlich kann einer höheren Welle mehr Energie entzogen werden als einer niedrigen.

Die aus der Wellenbewegung gewonnene Kraft kann nach dem physikalischen Grundgesetz
Arbeit = Energie = Kraft x Weg wieder in Energie umgesetzt werden.

In der DE,A1 3419565 werden zahlreiche Vorrichtungen und Verfahren aufgezählt, welche die Energie von Meereswellen ausnutzen. Es wird eine Vorrichtung zur Erzeugung hydraulischer oder elektrischer Energie aus Meereswellen mit Hilfe eines Schwimmkörpers, eines Energiewandlers und eines Verbindungsgliedes zum Meeresboden beschrieben. Die Länge des Verbindungsgliedes ist veränderlich, durch die Arbeitsgrenzen des Energiewandlers steuerbar und der Meereshöhe anpassbar. Weiter ist das Verbindungsglied mit einer Einrichtung versehen oder über eine Einrichtung geführt, welche die wirkende Kraft oder den Kraftweg erhöht. Diese Erhöhung erfolgt durch eine Hebelübersetzung oder eine flaschenzugartige Einrichtung. Weiter wird gezeigt, wie der Schwimmkörper in einer bestimmten Tauchtiefe seine maximale Hubkraft entfalten kann.

Die Erfinder haben sich die Aufgabe gestellt, eine Vorrichtung der eingangs genannten Art zu schaffen, welche zur Erzeugung hydrodynamischer Kraft komplizierte mechanische Einrichtungen, wie Hebel und Flaschenzüge, vermeidet und soweit wie möglich mit nicht oder wenig korrosionsanfälligen Materialien arbeitet.

Die Aufgabe wird erfindungsgemäss dadurch gelöst, dass das am Schwimmer angehängte Pumporgan wenigstens einen unter Verkürzung in Längsrichtung radial aufweitbaren, gas- und/oderflüssigkeitsundurchlässigen Schlauch mit je einer Eingangs-und/oder Ausgangsöffnung für wenigstens ein hydraulisches und/oder pneumatisches Druckmedium umfasst, dass jedem Schlauch flexible längslaufende Fasern von hoher Zugfestigkeit anliegen, welche einen mit dem Schwimmer verbundenen oberen Kraftansatz und einen mit einer Verankerung verbundenen unteren Kraftansatz haben, so dass die Zugkraft in Längsrichtung des Pumporgans nie an einem Schlauch angreift. Spezielle und weiterbildende Ausführungsformen der Vorrichtung sind Gegenstand von abhängigen Patentansprüchen.

Die zugfesten Fasern bestehen vorzugsweise aus an sich bekannten Materialien, wie beispielsweise Glas, Kohlenstoff, Siliciumkarbid, Paramid, einem Kunststoff oder einem rostfreien Stahl. Die Fasern können ebenfalls nach einem an sich bekannten Verfahren beschichtet sein.

Der Schlauch selbst besteht vorzugsweise aus einem elastischen Material, welches sich beim Einleiten eines Druckmediums ausdehnt. Nach einer Variante kann der Schlauch Längsfalten haben, in welche längslaufende Fasern eingelagert sind. Unter Druckeinwirkung werden die Falten gestreckt, was bezüglich der Fasern den gleichen Effekt zeigt wie die Ausdehnung eines elastischen Materials. Die flexiblen Fasern mit äusserst kleiner Längendehnung bei Zugbelastung folgen der Bewegung der Hülle, wegen der Ausbauchung der Fasern wird das Pumporgan verkürzt.

Als gepumptes Druckmedium bietet sich in erster Linie Wasser an, es sind jedoch alle hydraulischen, in gewissen Fällen auch pneumatische Druckmittel geeignet, welche umweltverträglich, leicht handhabbar und kostengünstig zu beschaffen sind. Für das äussere, stationäre Druckmedium eines doppelten Pumporgans bieten sich in erster Linie Druckluft und ähnliche komprimierbare Gase an, jedoch auch Flüssigkeiten, wiederum in erster Linie Wasser.

Die in der vorliegenden Anmeldung gezeigten Pumporgane können ohne weiteres andere Betätigungsmittel als Wellen haben, Voraussetzung ist lediglich eine Hin- und Herbewegung, auch kombiniert mit einer Rotationsbewegung, beispielsweise eine Handpumpe. Die Einsatzgrenzen liegen vor allem im ökonomischen Bereich, die Antriebsenergie muss billig und reichlich zur Verfügung stehen, was bei Wellenenergie in besonders günstigem Masse der Fall ist.

Die erfindungsgemässe Vorrichtung hat zahlreiche Verwendungsmöglichkeiten, beispielsweise:
- Erzeugung elektrischer Energie
- Wasserpumpe zur Wasserversorgung und zur Wasserspeicherung
- Durchmischung und Belüftung von stehenden Gewässern
- Entsalzung von Meereswasserdurch Inversosmose.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 das Prinzip eines einfachen Pumporgans bei niedriger Zugkraft,
- Fig. 2 das Prinzip eines Pumporgans gemäss Fig. 1 bei hoher Zugkraft,
- Fig. 3 das Prinzip eines doppelten Pumporgans bei hoher Zugkraft,
- Fig. 4 das Prinzip eines Pumporgans gemäss Fig. 3 bei niedriger Zugkraft,
- Fig. 5 den funktionellen Aufbau eines einfachen Pumporgans bei niedriger Zugkraft,
- Fig. 6 ein Pumporgan gemäss Fig. 5 bei hoher Zugkraft,
- Fig. 7 den funktionellen Aufbau eines doppelten Pumporgans bei hoher Zugkraft,
- Fig. 8 ein Pumporgan gemäss Fig. 7 bei niedriger Zugkraft,
- Fig. 9 eine Variante eines einfachen Pumporgans bei niedriger Zugkraft,
- Fig.10 eine Variante eines doppelten Pumporgans bei niedriger Zugkraft,
- Fig.11 einen Wellenenergie-Umwandler mit einfachem Pumporgan,
- Fig.12 einen Wellenenergie-Umwandler mit doppeltem Pumporgan,
- Fig.13 ein System eines Wellenkraftwerkes mit offenem Pumpsystem,
- Fig.14 ein Schema eines Wellenkraftwerkes mit einem geschlossenen Kreislauf,
- Fig.15 ein Wellenkraftwerk mit parallelen Pumporganen,
- Fig.16 einen optimierten Schwimmer auf einem Wellenberg, und
- Fig.17 einen optimierten Schwimmer in einem Wellental.

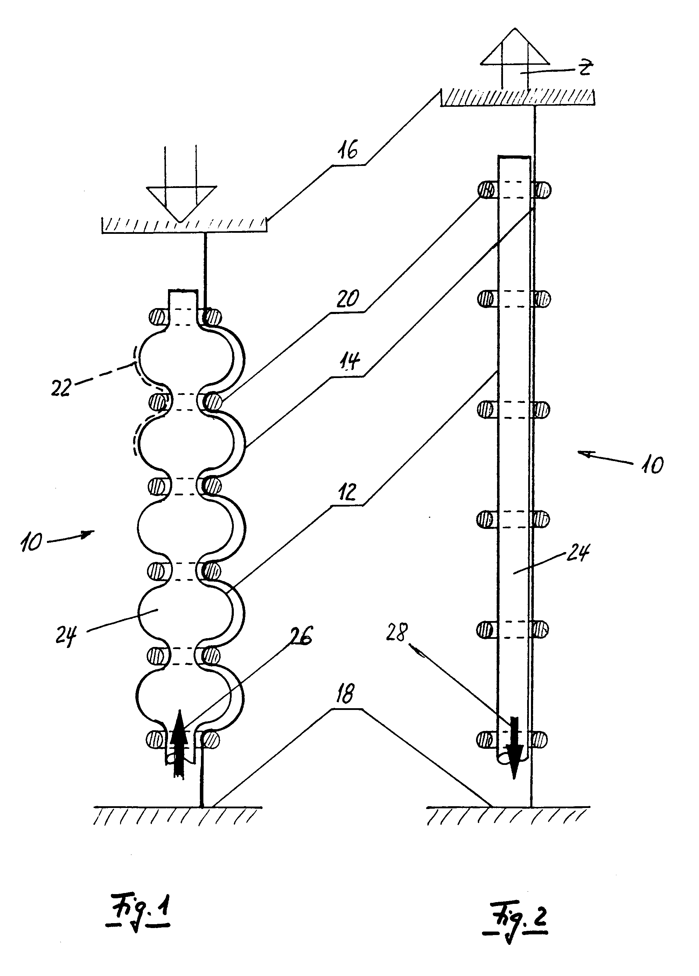

Ein in Fig. 1 unter 2 dargestelltes Pumporgan 10 umfasst im wesentlichen einen flexiblen, gas- und flüssigkeitsdichten Schlauch 12 und darauf angeordnete zugfeste und flexible Fasern 14 mit einem oberen Kraftansatz 16, welcher einem nicht dargestellten Schwimmer zugeordnet ist, und einem unteren Kraftansatz 18, welcher das Fundament sein kann oder diesem zugeordnet ist.

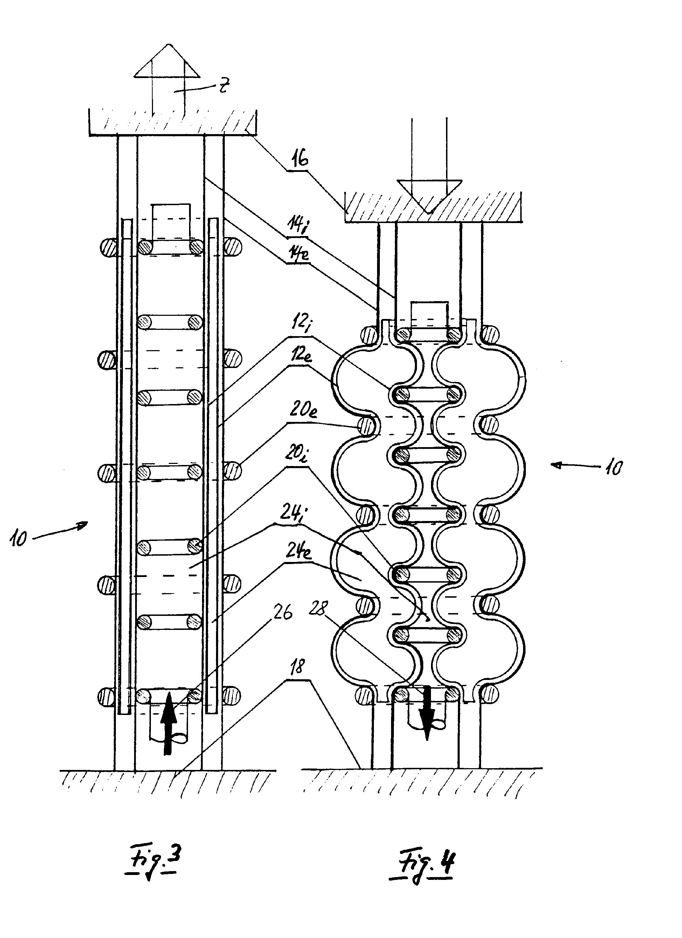

In regelmässigen Abständen ist der Schlauch durch einen Ring 20, auch Einschnürungsring genannt, geführt. Diese Ringe 20 können an einer in Fig. 1 teilweise angedeuteten Schutzhülle 22 befestigt sein, damit sie bei gestrecktem Schlauch (Fig. 2) mit parallel verlaufenden Fasern 14 nicht herunterfallen. Mit dem Ausdruck "Ring" werden alle zugfesten Mittel zur Einschnürung umfasst, auch z.B. Reifen, ringförmige Ketten und dgl.

Fig. 1 charakterisiert den Zustand mit geringer Zugkraft. Mit niedrigem Druck, in der Regel im Bereich von 1-10 bar oberhalb des umgebenden Wasserdrucks, wird ein Druckmedium 24 in Richtung des Pfeils 26 in den oben verschlossenen, weitgehend druckentlasteten Schlauch 12 gepumpt. Wegen des leicht erhöhten Drucks baucht der Schlauch zwischen den Ringen 20 aus, wobei die aufliegenden Fasern 14 mitgenommen werden.

In Fig. 2liegtder obere Kraftansatz 16wesentlich höher. Durch die ausgeübte grosse Zugkraft Z werden die Fasern 14 gestreckt, sie drücken den Schlauch 12 in eine gerade, nahezu rohrförmige Form ohne merkliche Ausbauchungen. Durch die Volumenverkleinerung wird das Druckmedium 24 unter hohem Druck, welcher mehrere Hundert bar erreichen kann, in Richtung des Pfeils 28 ausgepresst.

Aus Fig. 1 und 2 ist gut ersichtlich, dass in seiner Längsrichtung, der Richtung der Pfeile 26,28, keine Kraft auf den Schlauch 12 einwirkt.

Ein allenfalls beschädigter Schlauch 12 kann leicht ausgewechselt werden.

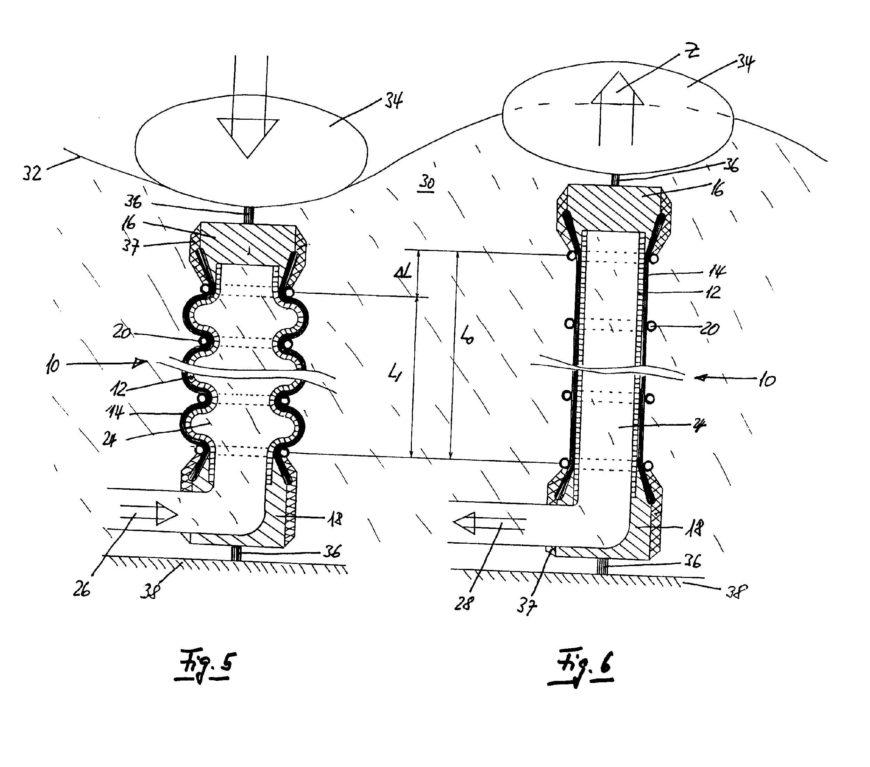

Die Ausführungsform des Pumporgans gemäss den Fig. 3 und 4 unterscheidet sich im wesentlichen dadurch, dass das innere Druckmedium 24_{;} beim Strecken des Pumporgans in Richtung des Pfeils 26 einfliesst (Fig. 3) und bei nachlassender Zugkraft Z in Richtung des Pfeils 28 ausgepresst wird.

Dies wird dadurch erreicht, dass ein innerer Schlauch 12ᵢ, gestützt durch steife innere Ringe 20ᵢ, und ein äusserer Schlauch 12ₑ, gestützt durch auch flexible äussere Ringe 20ₑ, eine flexible Kammer für ein äusseres Druckmittel 24ₑ beinhalten, im vorliegenden Fall elastische Druckluft Der innere und äussere Schlauch 12_{;},ₑ bedingen auch innere und äussere Fasern 14_{;},ₑ, welche die Zugkraft vollständig aufnehmen.

Der innere Schlauch 12_{;} begrenzt auch eine flexible Kammer für das innere Druckmedium 24ᵢ, welches gepumpt wird.

Das elastische äussere Druckmedium 24ₑdrückt die Schläuche 12_{;},ₑ mit einem Druck im Bereich von 5-10 bar auseinander, was durch die inneren und äusseren Fasern 14_{;},ₑ und die umschlungenen inneren und äusseren Ringe 20_{;},ₑ begrenzt wird.

Bei Zugentlastung (Fig. 4) ist der innere Schlauch 12_{;} nach innen ausgebaucht, wodurch das innere Druckmedium 24_{;} in Richtung des Pfeils 28 verdrängt wird. Bei hoher Zugkraft (Fig. 3) sind die Fasern 14_{;},ₑ parallel gestreckt, die Schläuche 12_{e,;} werden durch die Fasern unter Druckerhöhung im äusseren Druckmedium 24ₑ immer mehr in die Länge gedrückt, bis sie praktisch zylinderförmig sind. Das durch den inneren Schlauch 12_{;} gebildete Innenvolumen hat sich um ein Vielfaches vergrössert, in Richtung des Pfeils 26 wird äusseres Druckmedium angesaugt oder durch den hydrostatischen Druck hineingeleitet.

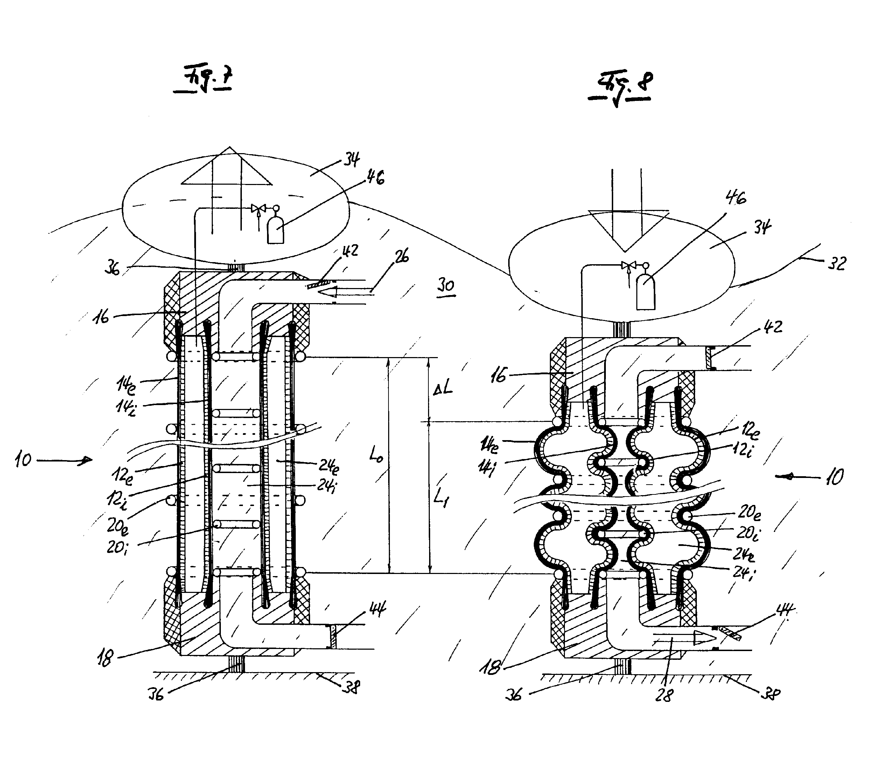

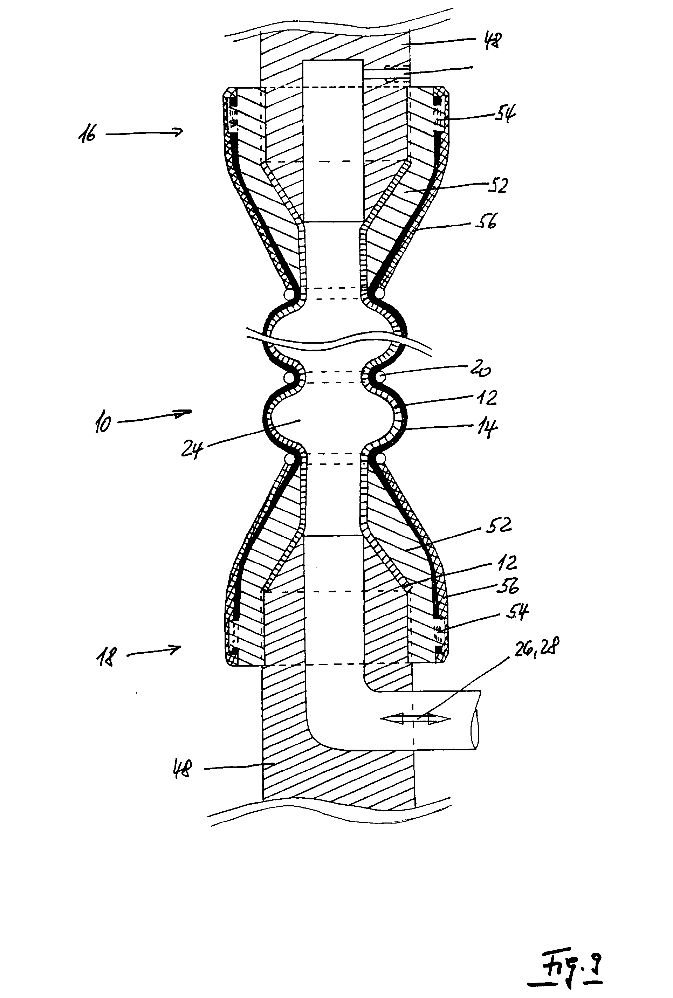

Fig. 5 und 6 zeigen das Prinzip eines einfachen Pumporgans 10 gemäss Fig. 1 und 2 als funktionellen Aufbau. In einem offenen Gewässer 30 werden Wellen 32 gebildet. Fig. 5 zeigt einen Schwimmer 34 im Bereich eines Wellentals. Der obere Kraftansatz 16 des Pumporgans 10 ist überein Zugorgan 36 mit dem Schwimmer 34 verbunden. Die tiefe Lage des Schwimmers 34 und damit des oberen Kraftansatzes 16 lässt den Schlauch 12 unter dem Niederdruck des in Richtung des Pfeils 26 einströmenden Druckmediums 24 ausbauchen. Der Schwimmer 34 taucht entsprechend der geringen Belastung nur wenig in das Gewässer 30 ein.

In Fig. 6 ist der Schwimmer 34 auf den Bereich eines Berges der Welle 32 angehoben und taucht dabei etwa zur Hälfte in das Gewässer 30 ein. Wegen des Auftriebs des Schwimmers 34, welcher ein Volumen von beispielsweise 5 bis weit über 100 m³ haben kann, wird auf den oberen Kraftansatz 16 mit gewaltiger Kraft eingewirkt. Die praktisch vollständig gestreckten, parallelen Fasern 14 formen den Schlauch 12 nahezu zylinderrohrförmig. Dadurch wird inneres Druckmedium 24 in Richtung des Pfeils 28 ausgepresst.

Im oberen und im unteren Kraftansatz 16,18 werden die Fasern 14 kraftschlüssig festgeklemmt, wozu eine Überwurfmuffe 37 dient. Es ist wiederum klar erkennbar, dass auf den Schlauch 12 keinerlei Zugkraft Z ausgeübt wird. Als Verankerung 38 dient beispielsweise eine auf den Grund des Gewässers eingegossene Betonplatte.

Der Arbeitshub AL entspricht der Differenz des Abstandes L₁ zwischen dem obersten und dem untersten Ring 20 gemäss Fig. 5 und dem Abstand Lₒ dieser Ringe gemäss Fig. 6.

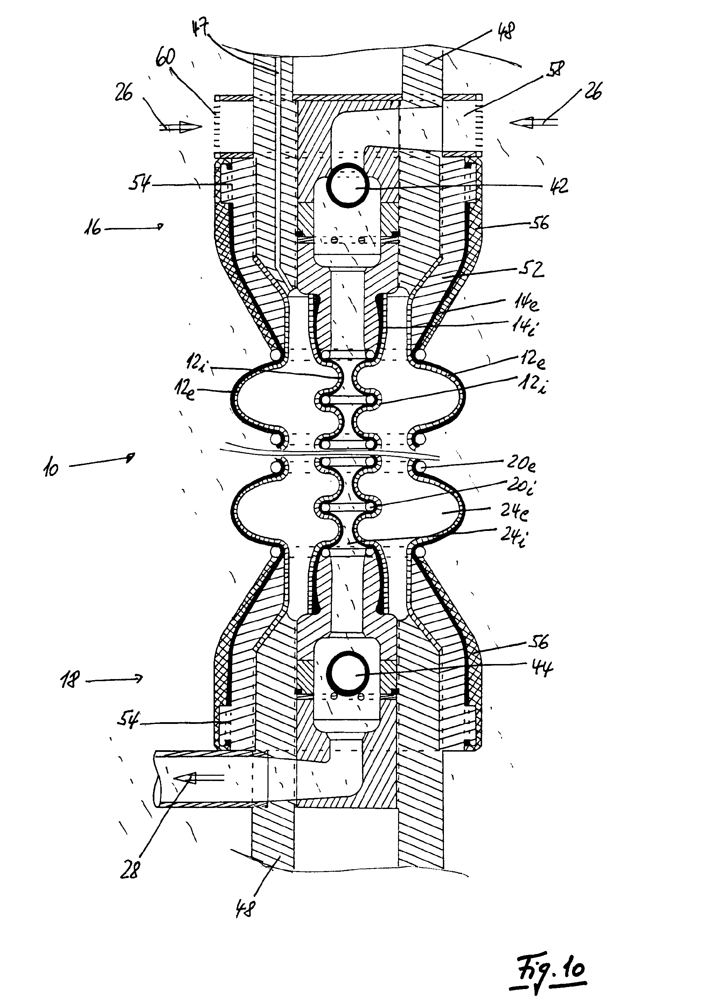

Die in Fig. 7 und 8 dargestellte Pumpe zur Förderung von Oberflächenwasser in die Tiefe funktioniert nach dem Prinzip der Fig. 3 und 4.

Zum betreffend Fig. 5 und 6 Vorbeschriebenen bestehen folgende Unterschiede:
- Der innere Schlauch 12_{;} ist oben und unten offen, weshalb ein Eingangsventil 42 und ein Ausgangsventil 44 vorgesehen sind. Während der gemäss Fig. 7 zu Ende gehenden Anhebung des Schwimmers 34 ist das Eingangsventil 42 offen, es wird Oberflächenwasser angesaugt. Das Ausgangsventil 44 dagegen bleibt für das Tiefenwasser geschlossen. In der gemäss Fig. 8 zu Ende gehenden Senkbewegung des Schwimmers 34 dagegen ist das Ausgangsventil 44 im Tiefenwasser offen, das sauerstoffreiche Oberflächenwasser kann ausströmen. Das Eingangsventil 42 für das Oberflächenwasser bleibt geschlossen.
- Im Schwimmer 34 ist ein Druckluftspeicher 46 angeordnet, welcher den hohen Druck am äusseren Druckmedium 24ₑ aufrecht erhalten kann. Mit 46 kann auch ein allgemeiner Druckmediumspeicher bezeichnet sein, welcher im Fall einer Flüssigkeit als äusserem Druckmedium 24ₑ elastisch sein muss.

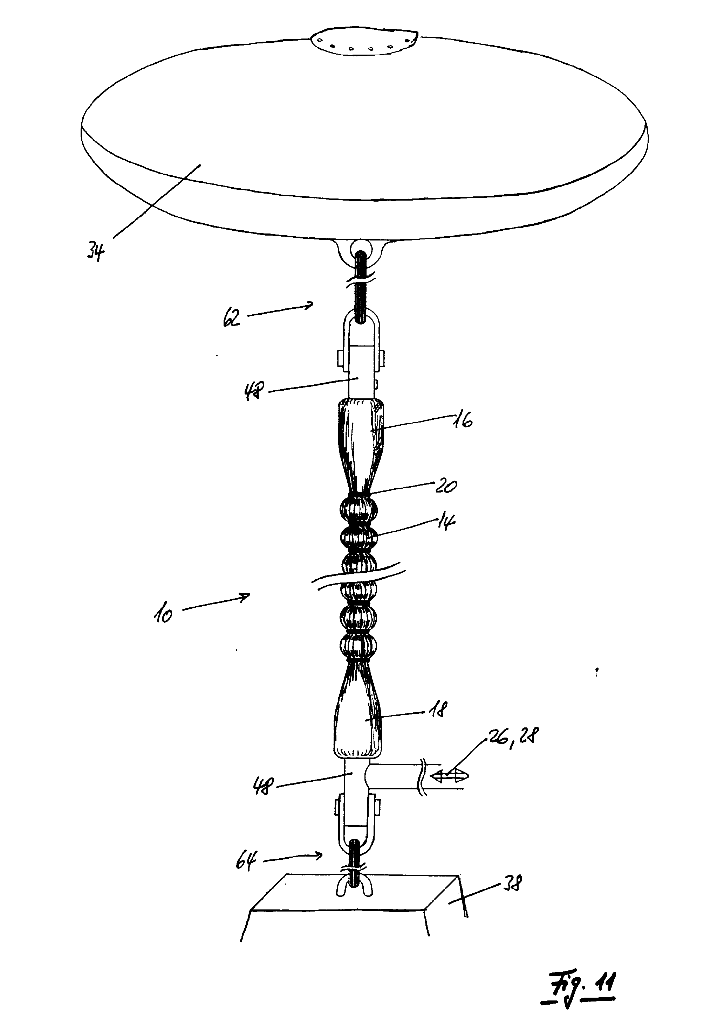

Fig. 9 zeigt insbesondere die Befestigung des auswechselbaren Schlauchs 12 und der Fasern 14 am oberen und unteren Kraftansatz 16, 18.

In einem Anschlussträger48 ist eine grosse axiale Bohrung für das Druckmedium 24 und ein kleiner radialer Durchstich als Entlüftungsaustritt 50 angeordnet. Über den sich in Richtung des funktionellen Pumporgans konisch verjüngenden Anschlussträger 48 ist ein kappenartiger Faserträger 52 gestülpt, welcher den Schlauch 12 dichtend, jedoch nicht zugfest, festklemmt. Die hochgezogenen Fasern 14 sind in einem Faserhalter 54 festgelegt. Der Faserträger 52 ist samt den aufliegenden Fasern 14 mit einem als Schutzhülle ausgebildeten Faserschutz 56 abgedeckt.

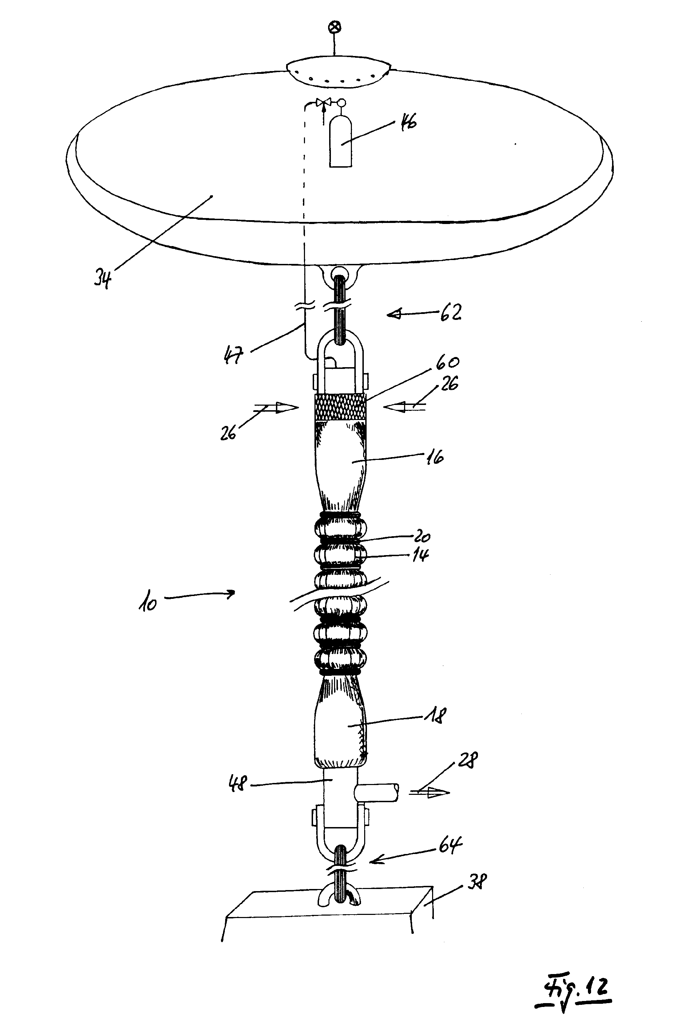

Gemäss Fig. 10 mit einem doppelten Pumporgan 10 führt ein Druckluftkanal 47 zur vom inneren und äusseren Schlauch 12_{;},ₑ gebildeten flexiblen Kammer mit dem äusseren Druckmedium 24ₑ. Selbstverständlich kann durch diesen Kanal 47 auch ein anderes äusseres Druckmedium als Luft zu- und abgeführt werden.

Der Eintritt von innerem Druckmedium 24_{;} im oberen Bereich erfolgt in einen Ringraum 58, welcher von aussen von einem zylindermantelförmigen Gitter 60 geschützt ist. Das Eintrittsventil 42 und das Austrittsventil 44 haben einen kugelförmigen Ventilkörper, welcher am Passitz anliegt (Eingangsventil 42) oder auf einem Träger aufliegt (Ausgangsventil 44).

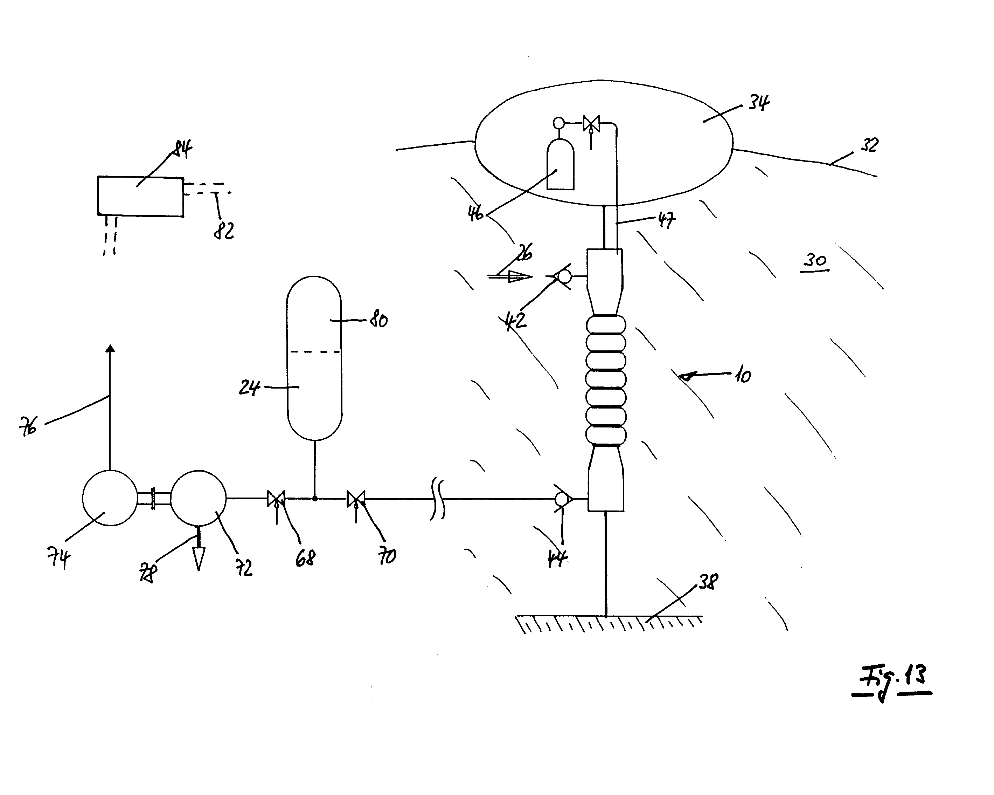

In Fig. 11 ist ein Wellenenergie-Umwandler mit einem einfachen Pumporgan 10 gemäss Fig. 9 dargestellt, welches über obere gelenkige Verbindungsglieder 62 mit einem Schwimmer 34 und über untere gelenkige Verbindungsglieder 64 mit einer Verankerung 38 verbunden ist.

Sinngemäss zeigt Fig. 12 einen Wellenenergie-Umwandler mit einem doppelten Pumporgan 10 gemäss Fig. 10, welches über obere gelenkige Verbindungen 62 mit einem Schwimmer 34 und über untere gelenkige Verbindungen 64 mit einer Verankerung 38 verbunden ist.

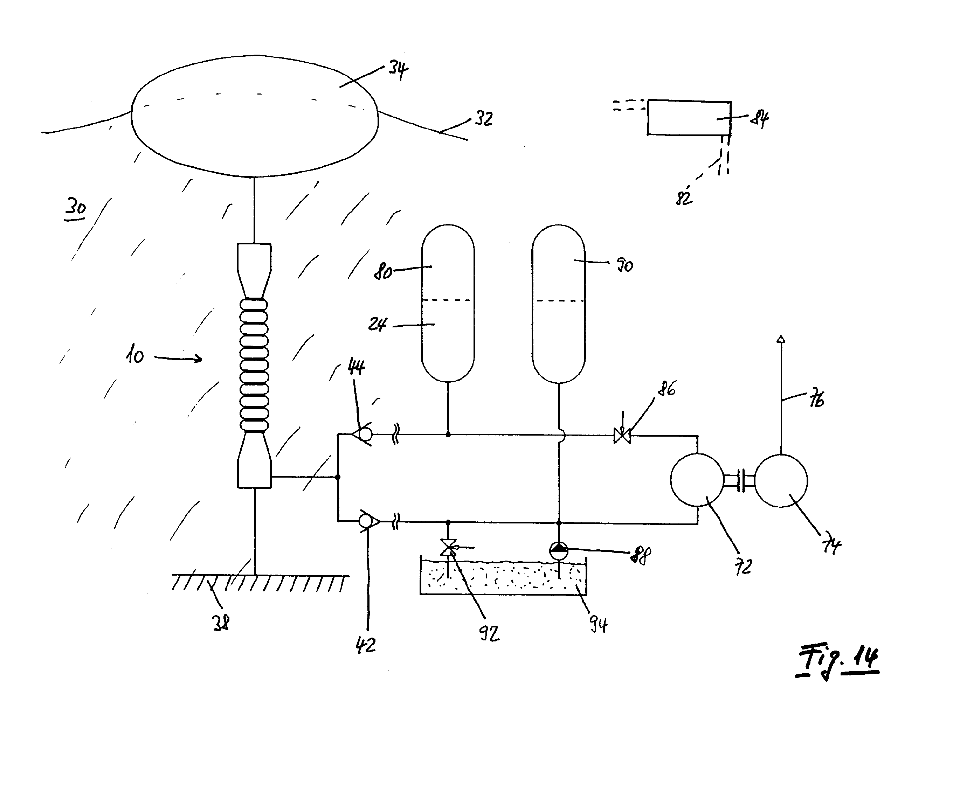

In Fig. 13 ist ein Schema eines Wellenkraftwerks mit einem offenen System dargestellt. Das einfache oder doppelte Pumporgan 10 entspricht vorhergehend gezeigten Ausführungsformen. Bei sinkendem Druck öffnet das Eingangsventil 42 und lässt Wasser 30 als Druckmedium 24 einströmen. Bei steigendem Druck dagegen öffnet das Austrittsventil 44, bei geschlossenem Eintrittsventil 42, sobald der kritische Druck der Hochdruckseite überstiegen ist. Über Regelventile 68, 70 gelangt das unter hohem Druck stehende Wasser zu einer Turbine 72, welche ihrerseits einen Generator 74 zur Erzeugung von elektrischem Strom antreibt, was durch Pfeil 76 angedeutet ist. Pfeil 78 deutet das aus der Turbine 72 ausströmende, entspannte Wasser an.

Ein Hochdruckspeicher 80 dient dem Ausgleich, wenn vom Pumporgan 10 kein Wasser geliefert wird, entleert sich der Hochdruckspeicher teilweise, wird jedoch bei der nächsten Bewegung des Pumporgans 10 wieder gefüllt.

Ein Mikroprozessor 84 ist über Leitungen 82 mit allen Regelorganen verbunden, was übersichtlichkeitshalber nicht im Detail gezeigt ist.

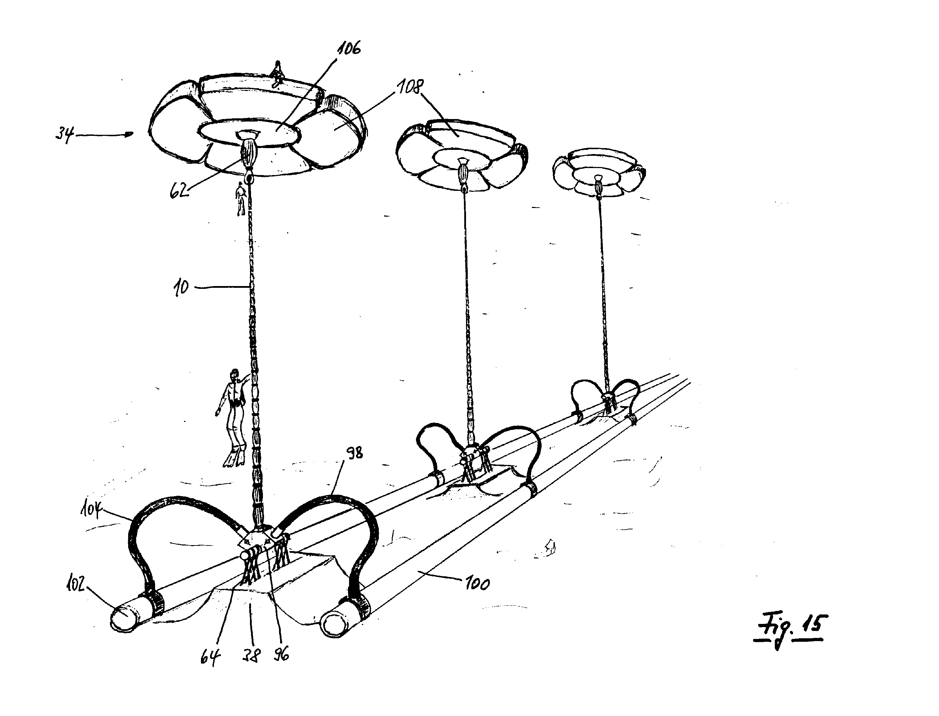

In Fig. 14 ist ein Schema eines Wellenkraftwerks mit einem geschlossenen Kreislauf dargestellt. In diesem wird als inneres Druckmedium 24 vorzugsweise Wasser, jedoch auch Hydrauliköl, geführt. Wie beim offenen System nach Fig. 13 kann ein einfaches oder ein doppeltes Pumporgan 10 eingesetzt werden, z.B. nach einer der vorhergehenden Figuren.

Bei hohem Druck in einem einfachen Pumporgan 10 öffnet das als Ausgangsventil ausgebildete Hochdruckventil44, über ein Regelventil 82 wird Druckmedium 24 zur Turbine 72 geleitet, der Rest füllt den Hochdruckspeicher 80. Beim Druckabfall im Pumporgan 10 schliesst das Hochdruckventil 44, und beim Unterschreiten eines eingestellten Wertes öffnet das als Eingangsventil fungierende Niederdruckventil 42. Eine mit Niederdruck arbeitende Versorgungspumpe 88 entzieht einem Ausgleichsgefäss 94 Wasser und leitet dieses in das Pumporgan 10 und allenfalls prozessorgesteuert in den Niederdruckspeicher 90. Ein weiteres Regelventil 92 ergänzt das geschlossene Hydrauliksystem.

In Fig. 15 sind mehrere Schwimmer 34 dargestellt, welche über ein Pumporgan 10 mit einem Hydrauliksystem verbunden sind, welches teilweise dargestellt ist. Es können auch mehrere Pumporgane 10 mit demselben Schwimmer 34 verbunden sein, beispielsweise bis 20.

Die gezeigten Froschmänner sollen die Höhe der Anlage andeuten, welche bei etwa 30 m liegen kann.

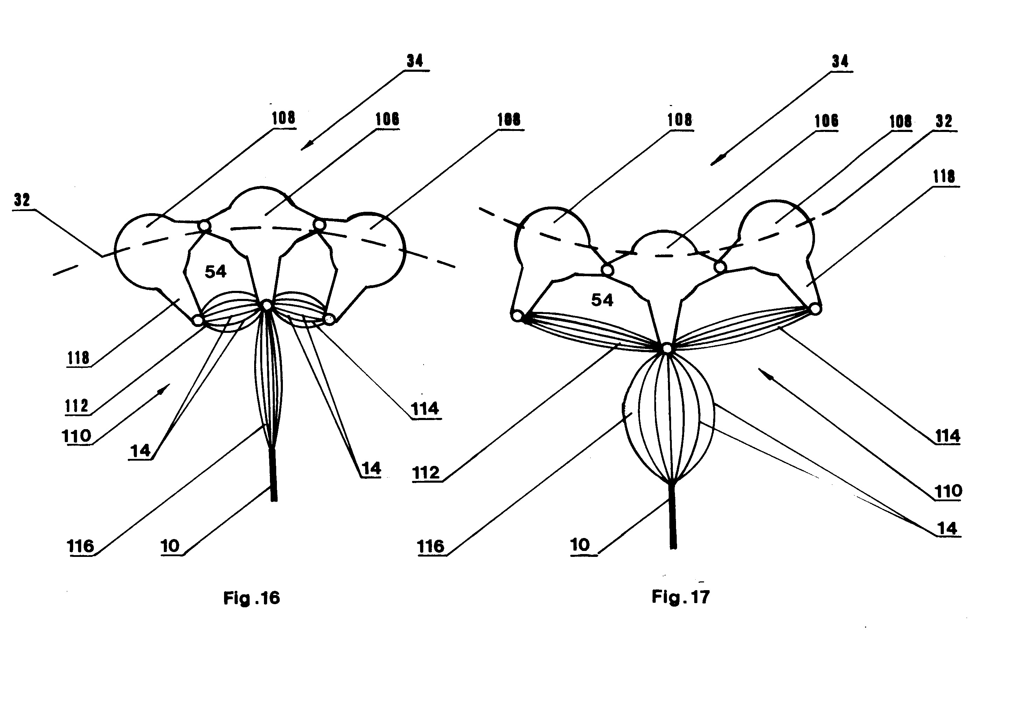

Die Aussenteile 108 des Schwimmers 34 sind schwenkbar an einem Mittelteil 106 angelegt, sie können funktionell analog den nachfolgenden Figuren 16 und 17 die Form der Wellen zur Vergrösserung des Arbeitshubes AL (Fig. 5,6) ausnützen.

Die an sich bekannten Verankerungen der Schwimmer 34 sind der Übersichtlichkeit wegen weggelassen.

Eine in am Fundament 38 befestigten Bändern schwenkbare Armatur 96 enthält ein Hochdruckventil (44 in Fig. 14), welches beim Öffnen hochgespanntes Druckmedium über eine Hochdruckleitung 98 einem Hochdruckrohr 100 zuführt, und ein Niederdruckventil (42 in Fig. 14), welches beim Öffnen das entspannte Druckmedium aus dem Niederdruckrohr 102 über eine Niederdruckleitung 104 in das Pumporgan 10 zurückfliessen lässt. Mehrere Pumporgane 10 pro Schwimmer 34 haben ein gemeinsames Hoch- und Niederdruckventil.

Fig. 16 und 17 zeigen einen dreiteiligen Schwimmer 34 auf einem Berg und in einem Tal einer Welle 32. Mit einem derartigen, ein Mittelteil 106 und gelenkig angefügte Seitenteile 108 aufweisenden Schwimmer 34 kann der Wellengang optimal ausgenutzt werden, indem der in der Senkrechten zurückgelegte Weg des Schwimmers 34 und damit der Arbeitshub AL vergrössert wird. Die Optimierungsvorrichtung 110 besteht aus drei mit Fasern 14 bewehrten Schläuchen 112, 114 und 116, welche unter sich kommunizierend verbunden sind und ein vorgespanntes, flüssiges oder gasförmiges Druckmedium enthalten. An den Fasern 14 der Hülle 116 lastet die gesamte Zugkraft der Vorrichtung. Diese Fasern 14 können auch einstückig mit denjenigen des Pumporgans 10 ausgebildet sein. Die Fasern 14 der Schläuche 112 und 114 sind mit der Längsrippe 118 des Mittelteils 106 und jeweils einer Längsrippe 118 eines Seitenteils 108 des Schwimmers 34 verbunden. Zu den Schläuchen des Zugorgans 10 besteht keine kommunizierende Verbindung der Druckmedien.

## Patentansprüche

1. Vorrichtung zur Erzeugung von hydrodynamischer Kraft durch Umwandlung von Energie von Wellen (32) eines offenen Gewässers (30), mit mindestens einem verankerten Schwimmer (34), wenigstens einem verlängerbaren Pumporgan (10) und einem Druckmedium (24), dadurch gekennzeichnet, dass das am Schwimmer (34) angehängte Pumporgan (10) wenigstens einen unter Verkürzung in Längsrichtung radial aufweitbaren, gas- und/oder flüssigkeitsundurchlässigen Schlauch (12) mit je einer Eingangs- und/oder Ausgangsöffnung für wenigstens ein hydraulisches und/oder pneumatisches Druckmedium (24) umfasst, dass jedem Schlauch (12) flexible längslaufende Fasern (14) von hoher Zugfestigkeit anliegen, welche einen mit dem Schwimmer (34) verbundenen oberen Kraftansatz (16) und einen mit einer Verankerung (38) verbundenen unteren Kraftansatz (18) haben, so dass die Zugkraft (Z) in Längsrichtung des Pumporgans (10) nie an einem Schlauch (12) angreift.

2. Vorrichtung nach Anspruch 1, dadurch gekennzeichnet, dass ein einfaches Pumporgan (10) einen Schlauch (12) mit in vorzugsweise regelmässigen Abständen angeordneten, aussenliegenden Ringen (20) und sich zwischen dem Schlauch (12) und den Ringen (20) erstreckende Fasern (14) umfasst.

3. Vorrichtung nach Anspruch 1, dadurch gekennzeichnet, dass ein doppeltes Pumporgan (10) einen äusseren (12ₑ) und einen inneren Schlauch (12,) mit in vorzugsweise regelmässigen Abständen ausserhalb des äusseren Schlauches (12ₑ) angeordneten äusseren Ringen (20ₑ) und innerhalb des inneren Schlauches (12,) angeordneten inneren Ringen (20ⱼ), und sich zwischen dem äusseren Schlauch (12ₑ) und den äusseren Ringen (20ₑ) erstreckende äussere Fasern (14ₑ) und sich zwischen dem inneren Schlauch (12,) und den inneren Ringen (20ⱼ) erstreckende innere Fasern (14ⱼ) hat, wobei innerhalb des inneren Schlauchs eine flexible Kammer für ein inneres Druckmedium (24ⱼ), das gepumpte Druckmedium, und zwischen dem inneren und dem äusseren Schlauch (12_{i,e}) eine flexible Kammer für das äussere Druckmedium (24ₑ) liegt.

4. Vorrichtung nach einem der Ansprüche 1-3, dadurch gekennzeichnet, dass die Schläuche (12, 12ₑ, 12,) auswechselbar sind.

5. Vorrichtung nach einem der Ansprüche 1-4, dadurch gekennzeichnet, dass die Schläuche (12, 12ₑ, 12ⱼ) aus einer dünnen, in Richtung der eng aneinander- oder übereinanderliegenden Fasern (14, 14ₑ, 14ⱼ) mit einer Schutzhülle (22) bedeckten Schicht bestehen, wobei die Schutzhülle vorzugsweise Befestigungsmittel für Ringe (20, 20ₑ, 20ᵢ) hat.

6. Vorrichtung nach einem der Ansprüche 1-5, dadurch gekennzeichnet, dass ein oder mehrere Schwimmer (34) ein oder mehrere Pumporgane (10) umfasst/umfassen, wobei alle Pumporgane (10) eines Schwimmer (34) eine Hochdruckleitung (98) zu einem gemeinsamen Hochdruckrohr (100) und bei einem geschlossenen System eine Niederdruckleitung (104) zu einem gemeinsamen Niederdruckrohr (102) mehrerer Schwimmer (34) haben.

7. Vorrichtung nach einem der Ansprüche 1-6, dadurch gekennzeichnet, dass ein als offenes System ausgebildetes Pumporgan (10) wenigstens ein Eingangsventil (42) und ein Ausgangsventil (44) für das gepumpte Druckmedium (24, 24ᵢ) hat, bei regelmässiger Abgabe von Hochdruckmedium an einen Verbraucher auch einen Hochdruckspeicher (80), Regelventile (68, 70) und eine Prozessorsteuerung (82, 84).

8. Vorrichtung nach einem der Ansprüche 1-6, dadurch gekennzeichnet, dass ein als geschlossenes System ausgebildetes Pumporgan (10) ein Hochdruckventil (44), ein Hochdruckregelventil (86) und ein Niederdruckventil (42) für das gepumpte Druckmedium (24, 24ᵢ) hat, bei regelmässiger Abgabe von Hochdruckmedium an einen Verbraucher auch einen Hochdruckspeicher (80), eine Niederdruck-Versorgungspumpe (88), einen Niederdruckspeicher (90), ein Ausgleichgefäss (94) und ein Niederdruckregelventil (92).

9. Vorrichtung nach einem der Ansprüche 1-8, dadurch gekennzeichnet, dass im Schwimmer (34) ein Speicher (46) für das äussere Druckmedium (24ₑ) angeordnet ist, mit einer zur flexiblen Kammer zwischen dem inneren und äusseren Schlauch (12_{i,e}) führenden Druckleitung (47) für das äussere Druckmedium (24ₑ).

10. Vorrichtung nach einem der Ansprüche 1-9, dadurch gekennzeichnet, dass der Schwimmer (34) wenigstens dreiteilig ausgebildet ist, mit einem Mittelteil (106) und der Wellenform folgenden Aussen- bzw. Seitenteilen (108) zur Vergrösserung des Arbeitshubes (AL).
